# EUROPEAN PATENT APPLICATION

(11) **EP 1 676 743 A1**
(43) Date of publication of application: **05.07.2006**
(21) Application number: 04380285.9
(22) Date of filing: 30.12.2004
(51) Int. Cl.: B60N 2/46

(54) **Height adjustable armrest for a vehicle door**

(71) Applicant: Grupo Antolin Ingenieria, S.A., 09007 Burgos (ES)
(72) Inventor: Dominguez Rubio, Francisco, 09007 Burgos (ES); Herrero Benito, Jesus, 09001 Burgos (ES)
(74) Representative: Carpintero Lopez, Francisco

(57) **Abstract**

It consists of at least one tube (3) joined to the door on which guided means of sliding are displaced, such as shoes (4) integral with the body (1), in their upward and downward motion, and it incorporates means of retention, such as an anchor spring (7), located inside the shoes which establish their engagement in notches (11) distributed at different heights of the tube (3) corresponding to different heights of the armrest. Likewise it has means of release, such as at least one slider (6), linked with means of manual operation, such as a lever (5), which push against the means of retention, compressing them and producing the release of the shoes (4) with respect to the tubes (3) thereby permitting the upward or downward motion of the body (1) until establishing a new anchor position corresponding to another height of the armrest (1).

## Description

### OBJECT OF THE INVENTION

The present invention relates to a vehicle door armrest of the type of those which are adjustable in height and operated manually.

It is an object of the invention that the armrest be simple to operate, by means of the manual movement of an easily accessible lever which incorporates in association therewith a mechanism having a reduced number of pieces and which allows comfortable regulation of the height of the armrest with little effort.

It is also an object of the invention that the armrest incorporate a guidance system for its upward motion and downward motion related with the means of retention which establish the interlocking of the armrest at different heights, and that said means of retention be easily actuated by means of the lever for the disconnection thereof from the guidance system allowing the upward motion or downward motion of the armrest until reaching the desired position.

### BACKGROUND OF THE INVENTION

Vehicle door armrests are known which are adjustable in height to facilitate their adaptation to the position which the user considers most appropriate for supporting his arm, there being mechanisms for manual operation and others power-driven.

Among the power-driven mechanisms those contemplated in the patents which are described below are noteworthy:
The Patent of Invention DE 201 20 959 refers to a height adjustable armrest for passenger cars which incorporates a motor-driven scissor mechanism, the movement of the motor being associated with the displacement of the lower extremity of one of the arms which comprise the scissor mechanism, the lower extremity of the other arm hinged with respect to a fixed point and the upper extremities of these arms in connection with the armrest, in such a way that the longitudinal displacement of the lower extremity of the arm connected with the motor determines the closing or opening movement of the scissor mechanism and in consequence the raising or lowering of the armrest.

The Patent of Invention US 6 796 601 refers to an armrest subassembly for a vehicle door which is motor-driven. The motor acts on a revolving spindle which defines the vertical displacement of a shell connected with the armrest structure and therefore produces the raising or lowering thereof.

On the other hand the Patent of Invention US 5 921 610 also contemplates the possibility of incorporating a motor which is used, in a possible embodiment as a means of operating a scissor mechanism for vertical displacement of an armrest, and in another possible embodiment it acts on a vertical spindle mounted in a structure with vertical displacement also in relation with the armrest. Other solutions for operation consist in using a pump the outlet of which is applied to a bellows on which the base of an armrest structure is mounted, in such a way that the output pressure of the pump defines a thrust on the base of said structure modifying the position of the armrest in height.

The incorporation of a motor results in an increase in weight, cost and mechanical complexity in contrast to manual type operating systems.

Regarding manually operated armrests, attention is drawn to the Patent of Invention DE 40 02 242 which relates to an armrest which tilts around a hinge, which is also displaceable in the horizontal direction to produce the rotation of the armrest and the raising or lowering movement thereof guided by two sliders.

### DESCRIPTION OF THE INVENTION

The height adjustable armrest for a vehicle door which constitutes the object of this invention incorporates manual operation which releases the retention of the armrest by means of a direct movement of a piece, usually a lever, and with practically no effort the height is regulated of the armrest which is displaced guided by at least one tube, preferably two, until establishing a new anchor position at the desired height.

In contrast to the motor-driven mechanisms it offers great mechanical and operative simplicity, and is comfortable to operate by simply acting on the operating lever. Said lever can be located in a button pad in the door panel, which location is easily accessible for the occupant's hand, satisfying the ergonomic criteria for operating mechanisms.

The armrest consists of a body, which is displaced guided upwards or downwards by at least one tube fixed to the door, which has the upper support proper and means of sliding, such as some lateral shoes which slide with respect to said tubes. Each of the shoes consists of a body which surrounds the tube with respect to which it slides, being incorporated in said body a receptacle wherein means of retention are displaced by action of the lever, which means establish their anchorage in a notch defined in the tube at the desired height.

The means of retention consist preferably of a spring, which rests on one side inside the shoe and can have on its other side an interlocking rod which fits in the notch of the tube. To disengage the spring from the tube some means of release have been foreseen which comprise a slider, linked to the operating lever, the sliding of which pushes on the rod compressing the spring and releasing it from its engagement in the notch of the fixed tube.

Thus, to simply displace the armrest upwards or downwards it is sufficient to act on the operating lever which causes the release of the means of retention, and simultaneously pull the armrest upwards or push thereon, respectively.

The new position of the armrest is fixed by releasing the operating lever but maintaining the pull or push on the armrest, which causes the slider to cease compressing the spring which begins to apply pressure, sliding on the surface of the tube, until it engages in the following notch, thereby locking the position of the armrest.

The tubes have several notches which will define different positions or heights of the armrest.

In a possible embodiment the slider is linked to the lever through an operating cable, in such a way that on acting on the lever the cable is tightened, the slider is displaced and the spring is compressed, then the body of the armrest is released from its linkage to the tube allowing the upward or downward guided displacement of the body of the armrest.

The cable of the operating lever has a sheath which allows the cable to bend with the desired curvature without losing tension, on the end of the cable is a tension spring which allows the operating lever to return to its idle position when released.

The operating lever can also be linked to the first slider through a rigid coupling formed by parallel bars, the incorporation being contemplated of a tension spring joined to the lever by one end and to the body by another which allows the idle position of the lever to be recovered when one ceases acting thereon.

Moreover it has been foreseen that the armrest can also incorporate some thrust springs, arranged around the tubes, and which are compressed against the shoes, applying a constant upward thrust thereon, so that once release of the means of retention is produced, by acting on the operating lever, the shoes and, therefore, the body, rise automatically, achieving thereby a more comfortable regulation of the height of the armrest.

To lock the armrest in the new position, it is only necessary to free the operating lever, which causes the slider to cease compressing the spring which begins to press on the surface of the tube and to slide against the latter through the action of the thrust spring, until the spring engages in the following notch, locking the position of the armrest.

To move the armrest downwards it is likewise necessary to act on the operating lever, which releases the shoes with respect to the tube, and simultaneously push on the armrest to overcome the force of the thrust springs, with the particularity that to achieve the downward motion of the armrest only a very small effort is required, necessary to overcome the force of the thrust spring, achieving a very comfortable regulation. The same as in the case of raising the armrest, when the operating lever is released, the spring engages in the nearest notch of the tube locking the armrest in a new position.

The armrest is conceived structurally and dimensionally to be sufficiently robust to withstand high support loads from the occupant, greater than normal requirements, as well as to have the necessary flexibility to comply with the side impact resistance requirements foreseen in the regulations governing motor vehicle door fittings.

In the preferred solution in which two or more tubes are incorporated, two possible ways are distinguished for coordinating the movement of the means of retention employed in each of the tubes.

In one case it involves linking the sliders of each tube through a transmission cable, in such a way that the displacement produced on the first slider, through the action of the lever, originates the accompanying displacement of the second slider, thereby achieving at the same time the engaging or disengaging of the shoes on/from each tube for fixing the position or release of the armrest.

In another case the possibility is envisaged of establishing a rigid coupling between the sliders through transmission rods which associate the movement of one slider with the movement of the other when the operating lever is actuated.

### DESCRIPTION OF THE DRAWINGS.

To complete the description which is being made and with the object of assisting in a better understanding of the characteristics of the invention, in accordance with a preferred practical embodiment thereof, said description is accompanied with a set of drawings as an integral part thereof, wherein by way of illustration and not restrictively, the following has been represented:
Figure 1. - It shows a view in perspective of the height adjustable armrest for an embodiment with two tubes and operating cable.
Figure 2. - It shows a rotated view of the representation of the previous figure.
Figure 3. - It shows a detail in perspective of the previous tube, nearer the lever, in the embodiment of the armrest with transmission cable.
Figure 4. - It shows a detail in perspective of the rear tube in the embodiment of the armrest with transmission cable.
Figure 5. - It shows a view in perspective of the armrest in the embodiment thereof with cable, in which the housing thereof is seen inside a door.
Figure 6. - It shows a view in perspective of the armrest in the embodiment which incorporates transmission rods between sliders.
Figure 7. - It shows a detail in perspective of one of the tubes of the embodiment represented in the previous figure.

### PREFERRED EMBODIMENT OF THE INVENTION

Next, with reference to the figures, a preferred embodiment of the height adjustable armrest for a vehicle door is described object of this invention.

The armrest is of the type of those which have a body (1) which has the upper support surface on which the arm rests, in which surface is preferably included a button pad (2), and also it incorporates at least one tube (3) linked to the door by fastening means (16) on which guided means of sliding (4) integral with the body (1) are displaced in their upward or downward motion.

The armrest is distinguished fundamentally in that it has means of retention (7) defined in the means of sliding (4) which are anchored in notches (11) distributed at different heights on the tube (3) corresponding to different heights of the armrest and they are disconnected from the tube (3) by manual operating means (5) which act on means of release (6) which produce the disengagement between the means of retention (7) of the means of sliding (4) and the tube (3), allowing the upward or downward motion of the body (1) until establishing a new anchor position corresponding to another height of the armrest (1).

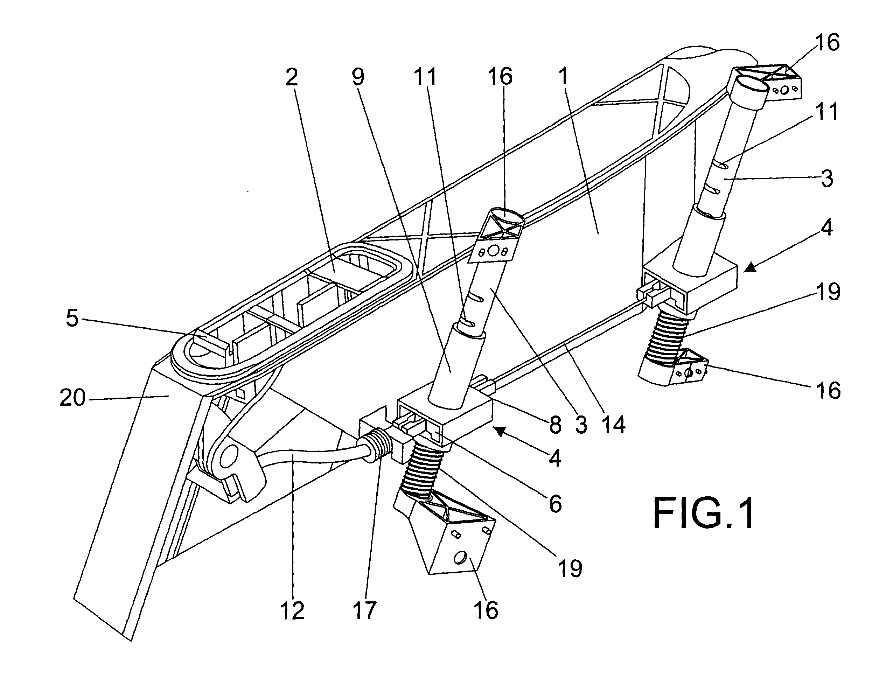

In figure 1 it is seen that the means of sliding (4) integral with the body (1) can consist of some shoes (4) which comprise a planar body (8) from which extends a tubular portion (9) which slides on the outside of the tube (3), which planar body (8) has a receptacle (10) in which are located the means of retention (7) and release (6) which establish the connection or disconnection between the shoes (4) and the tube (3).

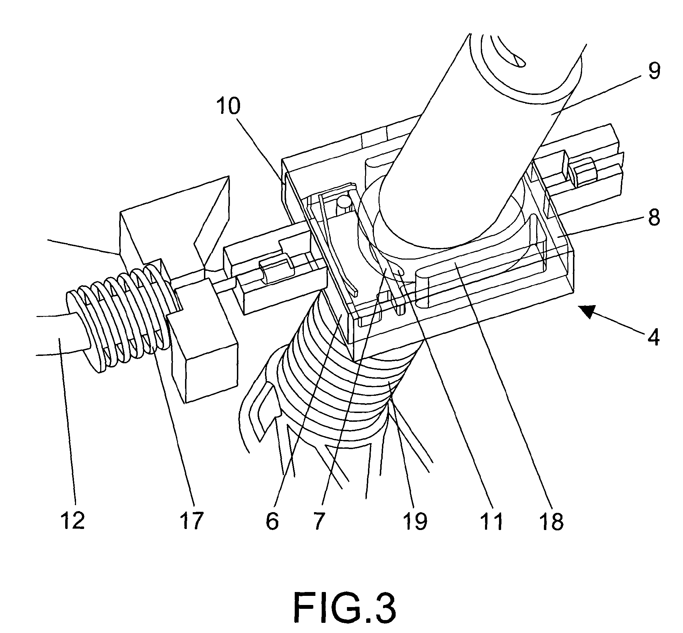

As is observed in figure 3, the means of release (6) can be constituted by at least one slider (6) the movement of which is associated with the movement of the manual operating means (5), whilst the means of retention (7) can be constituted by at least one anchor spring (7) anchored in one of the notches (11) of the tube (3) on which the slider (6) is pushed when acting on the manual operating means (5) for the release thereof from the notch (11) and disengagement of the shoe (4) allowing the displacement of the latter and therefore of the body (1).

The slider (6) can incorporate some pushers (18) shown in figure 3 which impact on the anchor spring (7) compressing it to facilitate the disengagement thereof from the notch (11).

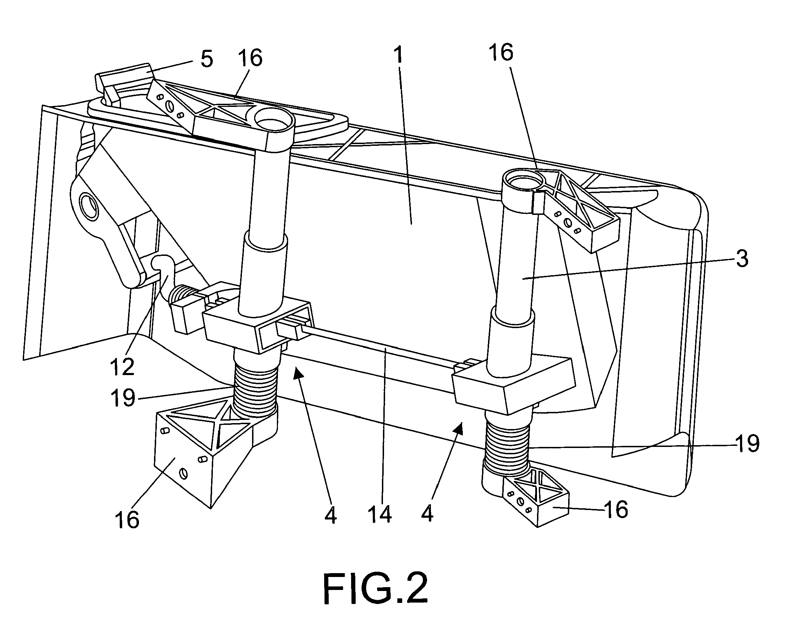

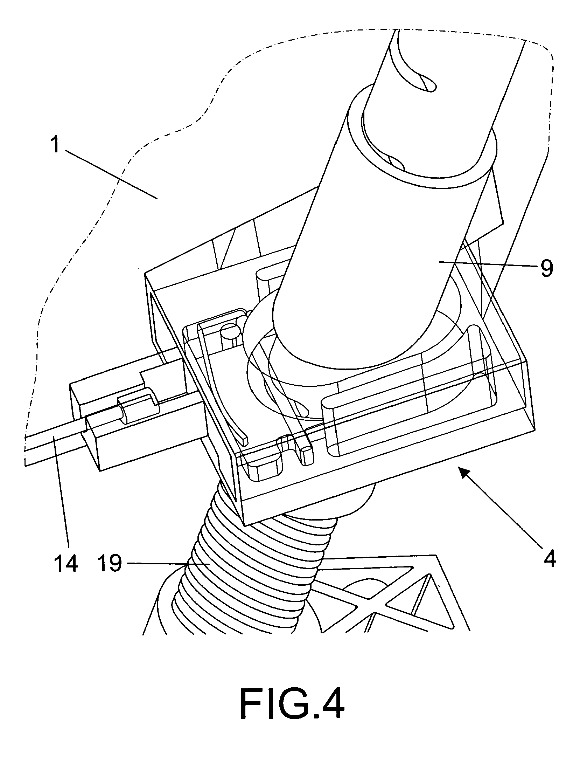

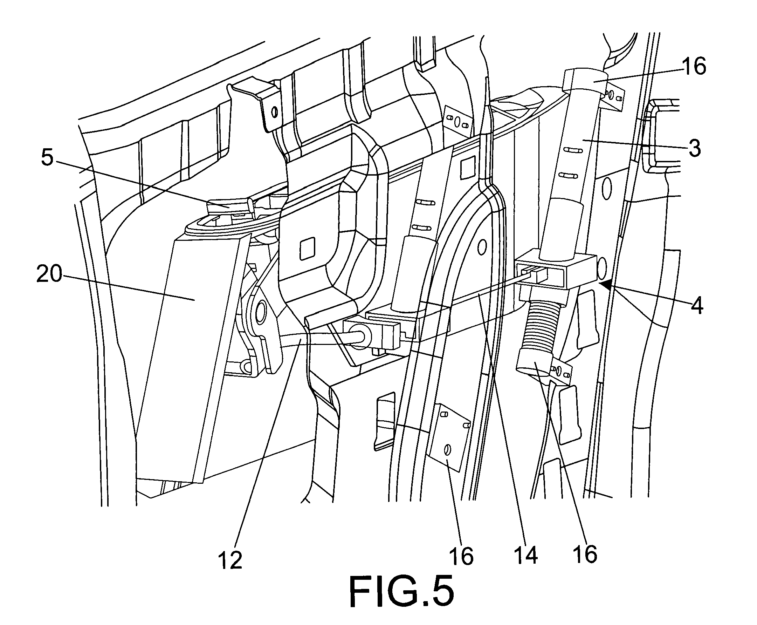

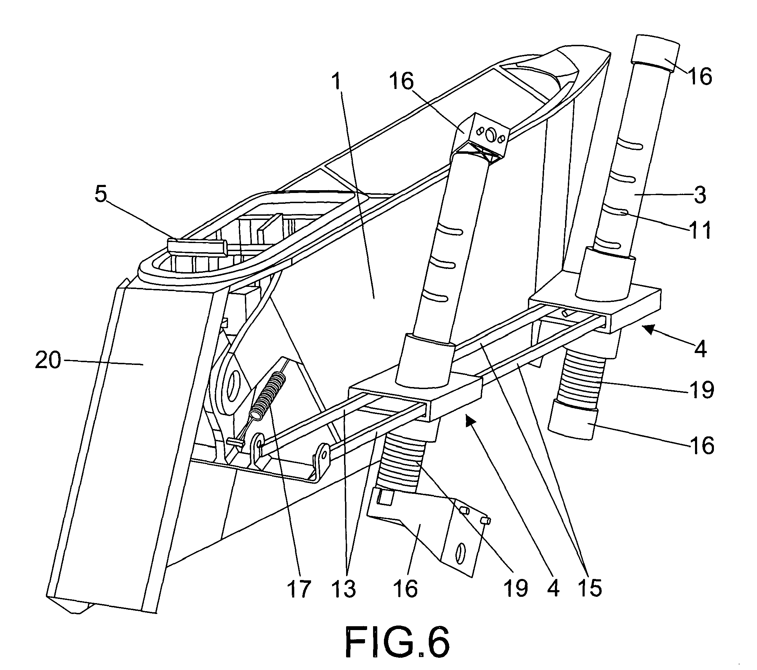

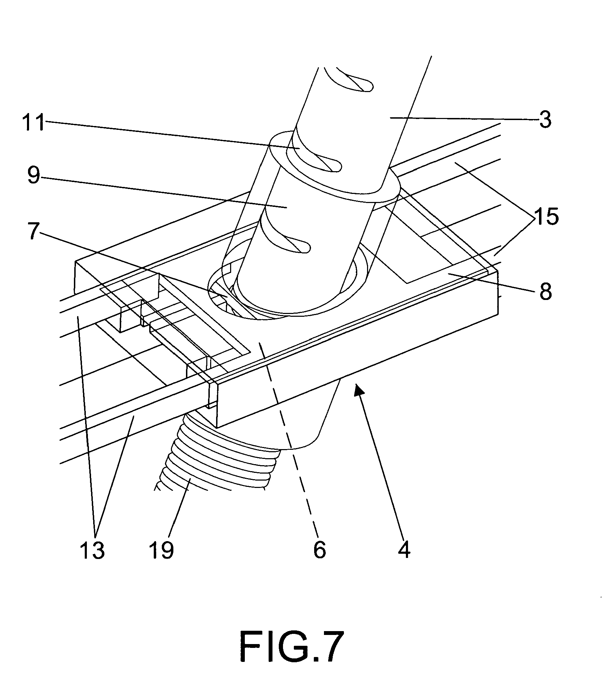

The manual operating means (5) can consist of a lever (5) which can be mounted in a button pad (2), the displacement of which produces the displacement of the sliders (6) through a first transmission means (12, 13) which can consist of an operating cable (12), in a possible embodiment represented in figures 1 to 5, or which can be some connecting rods (13), in accordance with the embodiment which is shown in figures 6 and 7.

The operating lever (5) incorporates in association, in the two possible embodiments, a return spring (17) which allows recovery of the original position of the lever (5) when operation thereon ceases returning the armrest to its retention position.

In the case of incorporating two or more tubes (3) the sliders (6) associated with each of the tubes (3) are combined in their displacement by a second transmission means (14, 15) consisting of a transmission cable (14) in the solution shown in figures 1, 2 and 5 or in some transmission bars (15) in the solution represented in figures 6 and 7.

It is pointed out that on the base of each of the tubes (3) some thrust springs (19) are mounted which are compressed by the shoes (4) which tend to push the aforesaid shoes (4) upwards with the object of producing their displacement when the means of retention are released (6, 7).

Furthermore in figures 1, 2, 5 and 6, the fittings (20) of the armrest are observed, which constitute the visible face thereof and which have an aesthetic function in accordance with the style of the door fittings.

## Claims

1. - Height adjustable armrest for a vehicle door of the type of those which comprise a body (1) which has an upper support surface on which the arm rests, in which is included preferably a button pad (2), as well as at least one tube (3) linked to the door by fastening means (16) on which are displaced guided means of sliding (4) integral with the body (1) in the upward or downward motion thereof, **characterized in that** it comprises:
- means of retention (7) defined in the means of sliding (4), which establish their anchorage in notches (11) distributed at different heights of the tube (3) corresponding to different heights of the armrest,
- means of release (6) defined in the means of sliding (4) which disengage the means of retention (7) with respect to the tube (3) and,
- manual operating means (5) which act on the means of release (6) allowing the upward or downward motion of the body (1) until establishing a new anchorage position through the means of retention.

2. - Height adjustable armrest for a vehicle door according to claim 1, **characterized in that** the means of sliding (4) integral with the body (1) consist of some shoes (4) which comprise a body which slides externally to the tube (3), planar body (8) which has a receptacle (10) in which are located the means of retention (7) and of release (6).

3. - Height adjustable armrest for a vehicle door according to claim 1, **characterized in that** the means of retention (7) comprise at least one anchor spring (7) which is lodged in one of the notches (11) of the tube (3)

4. - Height adjustable armrest for a vehicle door according to claim 3, **characterized in that** the means of release (6) comprise at least one slider (6), the movement of which is associated with the movement of the manual operating means (5), which pushes the anchor spring (7) compressing it for its release from the notch (11) and disengagement from the shoe (4) allowing the displacement of this last item and therefore of the body (1).

5. - Height adjustable armrest for a vehicle door according to claim 4, **characterized in that** the slider (6) incorporates some pushers (18) which impinge on the anchor spring (7) compressing it to facilitate its disengagement from the notch (11).

6. - Height adjustable armrest for a vehicle door according to claim 4, **characterized in that** the manual operating means (5) consist of a lever (5), the displacement of which produces the displacement of the slider (6) to which it is linked by a first transmission means (12, 13).

7. - Height adjustable armrest for a vehicle door according to claim 6, **characterized in that** the lever (5) incorporates in association a return spring (17) which allows the lever (5) to recover the original position when the pushing thereon ceases, the armrest returning to its retention position.

8. - Height adjustable armrest for a vehicle door according to claim 6, **characterized in that** the first transmission means (12, 13) consists of an operating cable (12).

9. - Height adjustable armrest for a vehicle door according to claim 6, **characterized in that** the first transmission means (12, 13) consists of some connecting rods (13).

10. - Height adjustable armrest for a vehicle door according to any one of the claims 1 to 9, **characterized in that** it comprises two tubes (3).

11. - Height adjustable armrest for a vehicle door according to claims 4 and 10, **characterized in that** the sliders (6) associated with each of the tubes (3) are joined to each other by means of a second transmission means (14, 15).

12. - Height adjustable armrest for a vehicle door according to claim 11 **characterized in that** the second transmission means consists of a transmission cable (14).

13. - Height adjustable armrest for a vehicle door according to claim 11 **characterized in that** the second transmission means consists of some transmission rods (15).

14. - Height adjustable armrest for a vehicle door according to claim 1, **characterized in that** additionally it comprises spring means (19) which push the means of sliding (4) constantly upwards.

15. - Height adjustable armrest for a vehicle door according to claim 14 **characterized in that** the spring means are constituted by a thrust spring (19) located in the base of at least one tube (3), which is compressed by the shoe (4).
